(19) Europäisches Patentamt
European Patent Office
Office européen des brevets

(11) **EP 3 700 683 B1**

(12) **EUROPÄISCHE PATENTSCHRIFT**

(45) Veröffentlichungstag und Bekanntmachung des Hinweises auf die Patenterteilung:
**10.01.2024   Patentblatt 2024/02**

(21) Anmeldenummer: **18795357.5**

(22) Anmeldetag: **22.10.2018**

(51) Internationale Patentklassifikation (IPC):
**B06B 1/06** *(2006.01)*    **G10K 11/00** *(2006.01)*
**G10K 9/22** *(2006.01)*    **G01S 7/521** *(2006.01)*
**G01S 15/08** *(2006.01)*    **G01S 15/88** *(2006.01)*

(52) Gemeinsame Patentklassifikation (CPC):
**B06B 1/0685; G01S 7/521; G01S 15/08;
G01S 15/88; G10K 9/22; G10K 11/002;**
B60G 2202/152; B60G 2400/252; B60G 2401/10;
B60G 2401/176; B60G 2500/30

(86) Internationale Anmeldenummer:
**PCT/EP2018/078826**

(87) Internationale Veröffentlichungsnummer:
**WO 2019/081393 (02.05.2019 Gazette 2019/18)**

(54) **ULTRASCHALLWANDLER MIT ZUMINDEST EINEM PIEZO-ELEKTRISCHEN OSZILLATOR**

ULTRASOUND TRANSDUCER HAVING AT LEAST ONE PIEZO-ELECTRIC OSCILLATOR

TRANSDUCTEUR D'ULTRASONS AVEC AU MOINS UN OSCILLATEUR PIÉZOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017   DE 102017219406
30.11.2017   DE 102017221618**

(43) Veröffentlichungstag der Anmeldung:
**02.09.2020   Patentblatt 2020/36**

(73) Patentinhaber: **Continental Automotive Technologies GmbH
30165 Hannover (DE)**

(72) Erfinder:
• **GLITSCH, Rolf
65812 Bad Soden (DE)**

• **RECK, Siegfried
31582 Nienburg/ Weser (DE)**

(74) Vertreter: **Continental Corporation
c/o Continental Teves AG & Co. OHG
Intellectual Property
Guerickestraße 7
60488 Frankfurt a. Main (DE)**

(56) Entgegenhaltungen:
EP-A1- 2 466 274        EP-A1- 2 858 378
WO-A1-2016/190993       DE-A1- 19 811 982
DE-A1-102007 049 212    GB-A- 2 214 031
US-A- 4 326 274

EP 3 700 683 B1

**EP 3 700 683 B1**

**Beschreibung**

Die Erfindung betrifft einen Ultraschallwandler mit zumindest einem piezo-elektrischen Oszillator, einer Dämpfungsmasse und zwei elektrisch leitfähigen Leitungselementen gemäß den Ansprüchen.

Ein Ultraschallwandler wandelt ein elektrisches Signal, also auch eine elektrische Schwingung, in ein akustisches Signal, also auch eine akustische Schwingung, um und umgekehrt. Es sind Ultraschallwandler bekannt, welche zur Wandlung einen Oszillator aus einer piezo-elektrischen Keramik einsetzen. Ultraschallwandler für gasförmige Schwingungsmedien weisen üblicherweise einen scheibenförmigen Oszillator aus einer piezo-elektrischen Keramik, eine sogenannte Anpassungsschicht auf der dem Schwingungsmedium zugewandten Seite des Oszillators und ein Mittel zur Dämpfung der Schwingungen auf der dem Schwingungsmedium abgewandten Seite des Oszillators auf. Das Mittel zur Dämpfung dient üblicherweise auch dazu, Reflektionen auf der dem Medium abgewandten Seite des Oszillators zu unterdrücken. Legt man eine zeitlich veränderliche elektrische Spannung an zwei gegenüberliegenden Seiten eines piezo-elektrischen Oszillators an oder bringt man einen piezo-elektrischen Oszillator in ein zeitlich veränderliches elektrisches Feld, so vollführt der Oszillator - davon getrieben - mechanische Schwingungen, welche akustisch übertragen werden können. Um eine so erzeugte akustische Schwingung - sprich Schall oder auch Ultraschall - möglichst gut an ein Schwingungsmedium zu übertragen, kann die Anpassungsschicht an die akustischen Impedanzen des Oszillators und des Schwingungsmediums, beispielsweise Luft, angepasst werden.

Umgekehrt führt das Anlegen einer mechanischen Spannung an einen piezo-elektrischen Oszillator dazu, dass eine elektrische Spannung zwischen zwei gegenüberliegenden Oberflächen des Oszillators gemessen werden kann.

Bei bekannten Ultraschallwandlern mit piezo-elektrischen Oszillatoren übertragen die Mittel zur elektrischen Anbindung des piezo-elektrischen Oszillators auch akustische Schwingungen auf elektrische und elektronische Bauteile wie beispielsweise Platinen. Die Übertragung von akustischen Schwingungen auf elektrische oder elektronische Bauteile ist unerwünscht und kann Signalverzerrungen und Überschwingen verursachen. Die von einem piezo-elektrischen Oszillator angeregten oder übertragenen Schwingungen überlagern beim Empfang des Nutzsignals, bspw. eines Luftakustischen Echos, der Schwingung durch ein Empfangsmittel (welches beispielsweise auf einer Platine angeordnet ist), weswegen die Übertragung der akustischen Schwingungen auf Empfangsmittel den Empfang von Nutzsignalen stören können und somit unerwünscht sind.

Bekannte Lösung zur elektrischen Anbindung von piezo-elektrischen Oszillatoren mittels Drahtbonden (Bonding mit sehr dünnen Drähten) oder verlöteten Litzen sind aufwendig, fehleranfällig, kostspielig und liefern nicht die gewünschte Qualität.

Aus DE 10 2007 049 212 A1 ist ein Ultraschallwandler mit einem Piezoelement bekannt. Ein Innenraum des Ultraschallwandlers kann mit einer Vergussmasse, mit der ein Schwingungsverhalten des Ultraschallwandlers abgestimmt werden können soll, befüllt sein.

Einen Ultraschallsignalwandler, der ein piezoelektrisches Substrat enthält, offenbart EP 2 858 378 A1. Ein isolierendes Dämpfungsglied bedeckt eine rückseitige Fläche des piezoelektrischen Substrats.

Aus GB 2 214 031 A ist ein Ultraschallschwinger mit einem piezoelektrischen Element, das mittels einer Feder elektrisch kontaktiert wird, bekannt, aber nicht, dass zwei Leitungselemente jeweils an einem Ende mit dem piezoelektrischen Element in Berührung stehen.

Eine Übertragungsvorrichtung für Ultraschallimpulse in Luft mit einem Ultraschallsender und einem Ultraschallempfänger ist aus US 4 326 274 A bekannt. Der Ultraschallsender und der Ultraschallempfänger weisen jeweils einen piezoelektrischen Dickenschwinger auf.

Einen Ultraschallwandler, der ein elektromechanisches Wandlerelement und ein Ultraschallfenster umfasst, offenbart EP 2 466 274 A1. Der Ultraschallwandler weist beispielsweise eine Feder, zum Beispiel eine Spiralfeder, auf, welche eine lösbare Kraft in Richtung des Ultraschallfensters auf das elektromechanische Wandlerelement aufbringt, um das Wandlerelement gegenüber dem Ultraschallfenster in einem Bereich einer vorgegebenen Position zu halten. Zur elektrischen Kontaktierung des Wandlerelementes kann die Feder dienen.

DE 198 11 982 A1 offenbart eine Ultraschall-Luftfeder mit einem Luftfederbalg und mit einem Ultraschallsensor zur Erfassung eines Abstands zwischen einem ersten und einem zweiten Ende des Luftfederbalgs. Der Ultraschallsensor enthält einen Ultraschallwandler, der ein piezoelektrisches Wandlerelement aufweist.

Einen Ultraschallwandler, der einen Träger und ein piezoelektrisches Material umfasst, das mindestens teilweise in den Träger eingebettet ist, offenbart WO 2016/190993 A1.

Eine Aufgabe der vorliegenden Erfindung ist daher, einen verbesserten Ultraschallwandler zu schaffen.

Diese Aufgabe wird durch einen erfindungsgemäßen Ultraschallwandler gemäß Anspruch 1 gelöst. Ausgestaltungen und Weiterbildungen des Erfindungsgedankens sind Gegenstand von abhängigen Ansprüchen.

Besondere Ausführungsformen sind Gegenstand der Unteransprüche.

Der piezo-elektrische Oszillator ist beispielsweise aus einer Piezokeramik gefertigt und ist nicht elektrisch leitfähig.

Der Ultraschallwandler kann so ausgestaltet sein, dass er auf einer Leiterplatte angeordnet und / oder befestigt werden kann.

Für Wellenausbreitung ist der folgende Zusammenhang zwischen Frequenz f, Wellenausbreitungsgeschwindigkeit c und Wellenlänge Lambda bekannt: Lambda = c / f. Im Fall von mechanischen Schwingungen ist die Schallgeschwindigkeit im jeweiligen Material die relevante Wellenausbreitungsgeschwindigkeit. Mechanische Schwingungen umfassen auch akustische Schwingungen. Für den Fall sich überlagernder Wellen oder stehender Wellen kann man mit diesem Zusammenhang die Lage von Schwingungsknoten bestimmen. Andererseits lässt sich mittels dieses Zusammenhangs beispielsweise auch zu einer bekannten Arbeitsfrequenz f eines Oszillators eine korrespondierende Wellenlänge Lambda = c / f bestimmen.

Ein erfindungsgemäßer Ultraschall-Wandler kann zur Bestimmung des Abstands zwischen zwei Punkten, beispielsweise zur Bestimmung der Höhe einer Luftfederung eines Kraftfahrzeugs, eingesetzt werden.

Bei dem erfindungsgemäßen Ultraschallwandler sind die Leitungselemente als Schraubenfedern ausgeführt. Diese Schraubenfedern sind bevorzugt aus einem metallischen Material gefertigt. Insbesondere vorteilhaft geeignet als Drahtmaterial ist hierbei ein Metall oder eine metallische Legierung mit guter elektrischer Leitfähigkeit, großem Schubmodul und großem Kompressionsmodul, beispielsweise Zinnbronzen und ähnliche Kupfer- Zinn-Ver- bindungen. Ein typischer Durchmesser des Drahts kann beispielsweise 0,4 mm betragen. Bevorzugt werden dabei die Leitfähigkeit oder Lötbarkeit beispielsweise durch eine Beschichtung oder einen Überzug aus Silber oder Zinn weiter verbessert. Drahtlängen können beispielsweise im Bereich von 50 bis 150 mm liegen. Wicklungen des Drahts in Schraubenform können beispielsweise Durchmesser von ungefähr 3 - 6 mm aufweisen.

Wird eine Messvorrichtung mit erfindungsgemäßem Ultraschall-Wandler in einer Luftfederung eingesetzt, so kann über die Laufzeit eines Ultraschall-Signals die gegenwärtige Ausdehnung des Luftfederelements bestimmt werden. Hierbei wird mit dem Ultraschall-Wandler über die Laufzeit eines Ultraschall-Signals die Entfernung des Ultraschall-Wandlers zu der auf der gegenüberliegenden Seite eines Luftfederbalgs befindliche Seite gemessen. Die Veränderung der Ausdehnung des Luftfederelements bewirkt die Veränderung der relativen Höhe des Luftfederelements. Somit kann die Karosserie eines Fahrzeugs, das mit einer Luftfederung ausgestattet ist, die Karosserie gegenüber den Achsen angehoben oder abgesenkt werden, indem die Ausdehnung der Luftfederelemente vergrößert oder verringert wird. Die Information über die gegenwärtige Ausdehnung eines Luftfederelements kann also beispielsweise für die Steuerung einer Niveauregelung oder -kontrolle eines Fahrzeugs verwendet werden. Die Ausdehnung eines Luftfederelements korrespondiert mit einer relativen Höhe beispielsweise eines damit ausgestatteten Federbeins gegenüber einer Referenz. Dabei kann im Stillstand des Fahrzeugs die Einstellgröße einer Niveauregulierung eine statische Höhe sein während im Fahrbetrieb beispielsweise eine gemittelte Höhe als Einstellgröße herangezogen werden kann. Bei der Verwendung einer erfindungsgemäßen Messvorrichtung mit Ultraschallwandler in einem Luftfedersystem kann die Messvorrichtung von außen auf ein Federelement, beispielsweise auf ein Gehäuse oder einen Federbalg, aufgeschraubt sein oder auch im inneren eines Luftfederelements, beispielsweise im Inneren eines Federbalgs angeordnet sein.

Üblicherweise ist ein Ultraschallwandler mit einem piezo-elektrischen Oszillator so aufgebaut, dass ein anzuregendes Schwingungsmedium über eine sogenannte Anpassungsschicht mit dem piezo-elektrischen Oszillator gekoppelt wird. Die Anpassungsschicht dient dazu, den piezo-elektrischen Oszillator möglichst gut an das in Schwingung zu versetzende Medium bzw. das Medium, dessen Schwingungen mit dem Oszillator erfasst werden, zu koppeln. Eine gute Kopplung zeichnet sich beispielsweise dadurch aus, dass die Übertragungsverluste bei einer Übertragung einer Schwingung des Mediums an den Oszillator oder einer

Schwingung des Oszillators an das Medium möglichst gering sind. Die Anpassungsschicht befindet sich typischerweise auf der Seite des piezo-elektrischen Oszillators, die dem anzuregenden Medium zugewandt ist. Dabei kann die Dicke der Anpassungsschicht, d.h. die Ausdehnung der Anpassungsschicht senkrecht zu der mit dem Oszillator in Kontakt stehenden Oberfläche, so in Abhängigkeit der Arbeitsfrequenz des Ultraschallwandlers gestaltet sein, dass ihre Dicke ein Viertel der Arbeitsfrequenz besitzt. Das ist die sogenannte Lambda-Viertel-Anpassung.

Die Dämpfungsmasse trägt zum Elastizitätsmodul des Ultraschallwandlers bei, insbesondere dann, wenn mit der Dämpfungsmasse der piezo-elektrische Oszillator, die Leitungselemente und die Anpassungsschicht ganz oder teilweise umgeben sind. Somit kann beispielsweise das von der Anpassungsschicht, dem piezo-elektrischen Oszillator und einer rückseitigen Seite, d.h. dem anzuregenden Medium abgewandten Seite, eines Ultraschallwandlers gebildete Innenvolumen mit einer Dämpfungsmasse ausgefüllt werden. Die dem anzuregenden Medium abgewandte Seite kann beispielsweise als Gehäusewand oder Platine ausgeführt sein. Schwingungen des Oszillators werden über die Dämpfungsmasse bzw. den Verbund und aus Dämpfungsmasse und den Leitungselementen auf die Anpassungsschicht und somit das Schwingungsmedium übertragen. Die Dämpfungsmasse wird so gewählt, dass sie die Übertragung von Schwingungsenergie auf die "Rückseite" des Ultraschallwandlers, d.h. die Abstützung auf der dem Schwingungsmedium abgewandten Seite, minimiert. Die Dämpfungsmasse kann auch dazu dienen, die verschiedenen Bestandteile des Ultraschallwandlers zusammenzuhalten. Die Dämpfungsmasse wird typischerweise nicht von einem Gehäuse umgeben, sondern beispielsweise durch ein Gießverfahren bei der Herstellung in die gewünschte Form gebracht. Das von der Dämpfungsmasse ausgefüllte Volumen wird dann in manchen Bereichen nicht durch andere Bauteile des Ultraschallwandlers begrenzt, sondern die Grenzfläche der Dämpfungsmasse bildet dort die äußere Begrenzung des Ultraschallwandlers. Es ist aber auch möglich, dass die Dämpfungsmasse von einem Gehäuse umgeben wird. Weiterhin ist möglich, die Dämpfungsmasse mit einer flexiblen Folie zu umgeben. Als Materialien für die Dämpfungsmasse kommen beispielsweise Polymere wie Silikone (Poly[organo]siloxane), Kunststoffe wie beispielsweise Polyurethan-Kunststoffe, Elastomere oder Epoxidharze in Frage.

In einem beispielhaften Ausführungsbeispiel weist der Ultraschallwandler zumindest zwei Federelemente aus Draht auf. Diese Federelemente sind Schraubenfedern. In diesem Ausführungsbeispiel ist die Drahtlänge dieses oder dieser Federelemente derart auf die Arbeitsfrequenz des Ultraschallwandlers angepasst, dass die dem piezo-elektrischen Oszillator abgewandten Enden der Federelemente, welche beispielsweise Verlötungsbereiche aufweisen können, im Schwingungsfall eine minimale Auslenkung, welche idealerweise null ist, erfahren. Im Schwingungsfall befinden sich diese Enden der Federelemente am Ort eines Schwingungsknotens. Betrachtet man den Schwingungsfall als eine stehende Welle, so befinden sich diese Enden an Wellenknoten. Aus dieser Gestaltung ergeben sich unter anderem die Vorteile, dass einerseits die Lötstellen den geringstmöglichen Schwingungen und Erschütterungen ausgesetzt sind und andererseits, dass akustische Schwingungen des piezo-elektrischen Oszillators so wenig wie möglich an elektrische Bauteile übertragen werden, welche mit den Lötstellen der Federelemente verbunden sind. Demnach sind die elektrischen Bauteile, beispielsweise eine Platine, möglichst gut akustisch vom piezo-elektrischen Oszillator entkoppelt. Aus dieser Entkopplung folgt zudem als weiterer Vorteil eine verbesserte Einkopplungsgüte von akustischen Schwingungen in das durch den Oszillator anzuregende Medium, z.B. ein gasförmiges Medium, weil weniger der Schwingungsleistung des Oszillators als Verlustleistung an die elektrischen Bauteile übertragen wird.

In einer besonders vorteilhaften Variante weist der piezo-elektrische Oszillator eines erfindungsgemäßen Ultraschallwandlers auf einer oder zwei Seiten eine zumindest teilweise Metallisierung der Oberfläche zur elektrischen Kontaktierung auf. In einer Weiterbildung eines Ultraschallwandlers, bei dem zwei Seiten des piezo-elektrischen Oszillators eine zumindest teilweise Metallisierung aufweisen ist die Metallisierung von einer Seite derart über eine weitere Seite des Oszillators geführt, dass beide Metallisierungen elektrisch getrennte Bereiche auf einer Seite des Oszillators bilden. Hierdurch wird besonders vorteilhaft ermöglicht, zwei Federelemente auf dieser Seite anzuordnen und hiermit zugleich elektrische Kontaktierung und akustische Entkopplung des piezo-elektrischen Oszillators zu schaffen. Dabei sind die beiden Metallisierungsbereiche elektrisch getrennt, denn die piezo-Keramik des piezo-elektrischen Oszillators ist nicht elektrisch leitfähig und zwischen den beiden metallisierten Bereichen befindet sich ein nicht metallisierter Bereich. Die Seite des piezo-elektrischen Oszillators, auf der sich die beiden metallisierten Bereiche befinden, kann beispielsweise so gestaltet sein, dass die Größen der beiden Metallisierungsflächen das Verhältnis 85 zu 15 oder 95 zu 5 aufweisen, wobei jeweils der nicht metallisierte Bereich nicht in das Verhältnis eingeflossen ist. Hierbei ist vorteilhafterweise der flächenmäßig kleinere Anteil derjenige, dessen Metallisierung um eine andere Seite des piezo-elektrischen Oszillators herum geführt ist und mit der der Seite mit zwei metallisierten Bereichen gegenüberliegenden Seite in Verbindung steht.

In bevorzugten Ausführungsformen von Ultraschallwandlern oder Luftfederungsvorrichtung mit Ultraschallwandlern sowie Messvorrichtung mit Ultraschallwandlern gemäß der vorliegenden Erfindung wird zusätzlich eine Temperatur, insbesondere eine Temperatur des Schwingungsmediums bestimmt und beispielsweise zur Korrektur der für die Abstandsbestimmung relevanten Schallausbreitung herangezogen.

In bevorzugten Ausführungsformen von Ultraschallwandlern oder Luftfederungsvorrichtung mit Ultraschallwandlern sowie Messvorrichtung mit Ultraschallwandlern gemäß der vorliegenden Erfindung wird zusätzlich ein Druck, insbesondere ein Druck des Schwingungsmediums direkt oder indirekt bestimmt und beispielsweise zur Korrektur der für die Abstandsbestimmung relevanten Schallausbreitung herangezogen. Der bestimmte Druck kann einem Fahrer eines Fahrzeugs oder dem Bediener einer Industrieanlage, welches oder welche den Ultraschallwandler aufweist, angezeigt werden oder über eine Schnittstelle oder einen Bus an weitere Geräte oder Instanzen in einem Fahrzeug oder einer Industrieanlage zur Verfügung gestellt werden. Insbesondere für das sogenannte on-board weighing, d.h. fahrzeugseitiges Wägen, kann ein Druck herangezogen werden, da beispielsweise eine Gewichtslast auf einer Achse einen Einfluss auf den Druck des Schwingungsmediums in einer Luftfederung an dieser Achse hat.

In bevorzugten Ausführungsformen von Ultraschallwandlern oder Luftfederungsvorrichtung mit Ultraschallwandlern sowie Messvorrichtung mit Ultraschallwandlern gemäß der vorliegenden Erfindung werden zusätzlich eine Temperatur und ein Druck bestimmt.

Bevorzugte Messvorrichtungen zur Messung des Drucks eines gasförmigen Mediums und/oder zur Messung eines Abstands weisen einen Ultraschallwandler gemäß der vorliegenden Erfindung auf.

Bevorzugt wird zur Verbindung verschiedener Bestandteile des hier vorgeschlagenen Ultraschallwandlers mit Leiterplatten die Einpresstechnik eingesetzt. Mittels der Einpresstechnik lassen sich lötfreie Verbindungen mit Leiterplatten herstellen. Dabei weist eine mit Bestandteilen des Ultraschallwandlers zu verbindende Leiterplatte Durchgangslöcher mit metallisierten Rändern auf und an dem oder den zu verbindenden Bestandteilen des Ultraschallwandlers sind Metallstifte angeordnet sowie mit den zu verbindenden Bestandteilen des Ultraschallwandlers verbunden. Gemäß der Einpresstechnik können nun diese Stifte mit der oder den Leiterplatten zu einer zugleich elektrisch leitenden und mechanisch fixierenden Verbindung gebracht werden, indem die zu verbindenden Bestandteile des Ultraschallwandlers und die Leiterplatte oder Leiterplatten so zusammen gebracht werden, dass die Stifte durch die metallisierten Durchgangslöcher auf der Platine ragen und sich so die Stifte und die Leiterplatte oder Leiterplatten gemäß der Einpresstechnik verbinden. Bezeichnend ist, dass die Stifte, auch Einpressstifte genannt, in das oder die metallisierten Durchgangslöcher gepresst werden. Damit es zu einer festen Verbindung kommt, ist es notwendig, dass eine Diagonale eines Stiftsquerschnitts größer ist als der Durchmesser des damit zu verbindenden Lochs. So verformt sich beim Einpressen entweder der Stift oder das Loch. Dabei ist es möglich, die Stifte massiv zu gestalten, was zur Verformung des Lochs beim Einpressen führt, oder die Stifte sind verformbar, beispielsweise indem sie einen hohlen Bereich beispielsweise mit Federeigenschaften aufweisen.

Bei einer besonders vorteilhaften Ausführungsform eines Ultraschallwandlers ist der Verbund aus der Dämpfungsmasse und den Leitungselementen so gestaltet, dass Schwingungen des piezo-elektrischen Oszillators auf ihrem Weg durch den Verbund derart gedämpft werden, dass Ihre Amplitude an der Abstützung um mindestens einen Faktor 10 schwächer sind als am piezo-elektrischen Oszillator. Dadurch wird besonders vorteilhaft ermöglicht, die Übertragung von Schwingungen des piezo-elektrischen Oszillators auf an der Abstützung anliegende weitere Elemente und/oder Reflexionen von Schwingungen an an der Abstützung anliegenden weiteren Elemente zu reduzieren. Dabei kann es besonders vorteilhaft sein, den Ultraschallwandler so zu gestalten, dass der Abstand zwischen dem piezo-elektrischen Oszillator und der Abstützung möglichst groß und / oder die effektive Länge von Leitungselementen möglichst groß ist, sodass die Schwingungen bei der Ausbreitungsbewegung als Welle durch Dämpfungsmasse und / oder Leitungselemente eine möglichst lange Strecke bis zur Abstützung zurück legen müssen und daher über eine möglichst lange Strecke gedämpft werden können. Weiterhin ist die akustische Impedanz der Dämpfungsmasse relevant für die Abschwächung der Amplitude einer Schwingung entlang ihrer Ausbreitung durch die Dämpfungsmasse. Daher ist die akustische Impedanz der Dämpfungsmasse auch relevant dafür, mit welcher Amplitude eine Schwingung auf weitere an der Abstützung des Ultraschallwandlers anliegende Elemente, beispielsweise eine Platine, übertragen wird. Gemäß der vorliegenden Weiterbildung dieser Ausführungsform kann mit einem erfindungsgemäßen Material für die Dämpfungsmasse, nämlich Epoxidharz oder ein anderes der genannten Materialien, eine Abschwächung der Amplitude um einen Faktor 100 erreicht werden, wodurch die genannten Vorteile in noch stärkerem Maß erzielt werden.

Bei einer besonders vorteilhaften Ausführungsform eines Ultraschallwandlers ist der Verbund aus der Dämpfungsmasse und den Leitungselementen so gestaltet, dass Schwingungen des piezo-elektrischen Oszillators auf ihrem Weg durch den Verbund derart gedämpft werden, dass Ihre Amplitude an der Abstützung um mindestens einen Faktor 100 schwächer sind, als am piezo-elektrischen Oszillator. Dadurch wird besonders vorteilhaft ermöglicht, die Übertragung von Schwingungen des piezo-elektrischen Oszillators auf an der Abstützung anliegende weitere Elemente und/oder Reflexionen von Schwingungen an an der Abstützung anliegenden weiteren Elemente zu reduzieren. Dabei kann es besonders vorteilhaft sein, den Ultraschallwandler so zu gestalten, dass der Abstand zwischen dem piezo-elektrischen Oszillator und der Abstützung möglichst groß und / oder die effektive Länge von Leitungselementen möglichst groß ist, sodass die Schwingungen bei der Ausbreitungsbewegung als Welle durch Dämpfungsmasse und / oder Leitungselemente eine möglichst lange Strecke bis zur Abstützung zurück legen müssen und daher über eine möglichst lange Strecke gedämpft werden können.

Bei einer besonders vorteilhaften Ausführungsform eines Ultraschallwandlers ist die Länge der Leitungselemente derart auf eine Arbeitsfrequenz des piezo-elektrischen Oszillators abgestimmt, dass an der Abstützung die Übertragung von Schwingungsenergie von Schwingungen des piezo-elektrischen Oszillators dadurch minimiert ist, dass eine Bedingung für einen Schwingungsknoten an der Abstützung vorliegt. Dadurch wird besonders vorteilhaft ermöglicht, die Übertragung von Schwingungen des piezo-elektrischen Oszillators auf an der Abstützung anliegende weitere Elemente und/oder Reflexionen von Schwingungen an an der Abstützung anliegenden weiteren Elemente zu reduzieren.

An dem Ende eines Leitungselementes, das mit dem piezo-elektrischen Oszillator in Berührung steht, tritt die maximale Schwingungsamplitude der vom Oszillator angeregten oder übertragenen Schwingungen auf, weil dieses Ende mit dem Oszillator schwingt. In gleicher Weise tritt die maximale Schwingungsamplitude dort in der Dämpfungsmasse auf, wo Sie mit dem Oszillator in Berührung steht.

Das andere Ende eines Leitungselementes, welches also nicht mit dem Oszillator in Berührung steht, soll gemäß dieser besonders vorteilhaften Ausführungsform eines Ultraschallwandlers besonders wenig mit der vom Oszillator angeregten oder übertragenen Schwingung schwingen. In dieser Ausführungsform ist dazu die Länge der Leitungselemente derart auf eine Arbeitsfrequenz des piezo-elektrischen Oszillators abgestimmt, dass die Bedingung für einen Schwingungsknoten an der Abstützung des Ultraschallwandlers vorliegt. Für die Wellenlänge Lambda, die Länge L des oder der Leitungselemente und eine natürliche Zahl k (d.h. k ist ein Element aus der Reihe der natürlichen Zahlen 1, 2, 3, ...) liegt eine Bedingung für einen Schwingungsknoten vor, wenn die folgende Bedingung erfüllt ist:

```
L = k * (lambda / 2) - (lambda / 4).
```

Diese Bedingung lässt sich auch wie folgt formulieren:

$$L = (2*k-1) * (lambda / 4).$$

Setzt man für L die Weglänge der Ausbreitung einer Schwingung oder Welle durch die Dämpfungsmasse ein, erhält man analog Bedingungen für Schwingungsknoten in der Dämpfungsmasse.

Zusammenfassend: Die Bedingung für einen Schwingungsknoten an der Abstützung ist gegeben, wenn die Länge der Leitungselemente und / oder der von dem Verbund überbrückte Abstand zwischen dem piezo-elektrischem Oszillator und der Abstützung derart gestaltet ist, dass die Länge und / oder der Abstand ein ungeradzahliges Vielfaches von einem Viertel der mit der Arbeitsfrequenz des piezo-elektrischen Oszillators korrespondierenden Wellenlänge ist.

Bei einer weiteren besonders vorteilhaften Ausführungsform eines Ultraschallwandlers ist der von dem Verbund aus der Dämpfungsmasse und den Leitungselementen überbrückte Abstand zwischen dem piezo-elektrischem Oszillator und der Abstützung derart auf eine Arbeitsfrequenz des piezo-elektrischen Oszillators abgestimmt, dass an der Abstützung die Übertragung von Schwingungsenergie von Schwingungen des piezo-elektrischen Oszillators dadurch minimiert ist, dass eine Bedingung für einen Schwingungsknoten an der Abstützung vorliegt. Der Abstand entspricht einer von der Schwingung bei Ihrer Ausbreitung durch die Dämpfungsmasse durchlaufenen Strecke. Dadurch wird besonders vorteilhaft ermöglicht, die Übertragung von Schwingungen des piezo-elektrischen Oszillators auf an der Abstützung anliegende weitere Elemente und/oder Reflexionen von Schwingungen an an der Abstützung anliegenden weiteren Elemente zu reduzieren.

Bei einer weiteren besonders vorteilhaften Ausführungsform eines Ultraschallwandlers sind sowohl die Leitungselemente für sich genommen als auch der Verbund , welchem auch die Leitungselemente angehören, derart auf eine Arbeitsfrequenz des piezo-elektrischen Oszillators abgestimmt, dass an der Abstützung die Übertragung von Schwingungsenergie von Schwingungen des piezo-elektrischen Oszillators dadurch minimiert ist, dass die Bedingung für einen Schwingungsknoten an der Abstützung vorliegt. Dadurch wird besonders vorteilhaft ermöglicht, die Übertragung von Schwingungen des piezo-elektrischen Oszillators auf an der Abstützung anliegende weitere Elemente und/oder Reflexionen von Schwingungen an an der Abstützung anliegenden weiteren Elemente zu reduzieren.

Bei einer besonders vorteilhaften Ausführungsform eines Ultraschallwandlers, bei dem die Länge der Leitungselemente oder der von dem Verbund aus der Dämpfungsmasse und den Leitungselementen überbrückte Abstand zwischen dem piezo-elektrischem Oszillator und der Abstützung oder sowohl die Leitungselemente für sich genommen als auch der Verbund, welchem auch die Leitungselemente angehören, derart auf eine Arbeitsfrequenz des piezo-elektrischen Oszillators abgestimmt ist, ist die Bedingung für einen Schwingungsknoten an der Abstützung gegeben, indem die Länge der Leitungselemente und / oder der von dem Verbund überbrückte Abstand zwischen dem piezo-elektrischem Oszillator und der Abstützung derart gestaltet, dass die Länge und / oder der Abstand ein ungeradzahliges Vielfaches von einem Viertel der mit der Arbeitsfrequenz des piezo-elektrischen Oszillators korrespondierenden Wellenlänge ist. Indem derart die Bedingung für einen Schwingungsknoten an der Abstützung des Ultraschallwandlers eingehalten wird, kann besonders vorteilhaft die Übertragung von Schwingungen des piezo-elektrischen Oszillators auf an der Abstützung anliegende weitere Elemente und/oder Reflexionen von Schwingungen an an der Abstützung anliegenden weiteren Elemente reduziert werden.

Die Leitungselemente sind als Schraubenfedern gestaltet. Durch eine zur Schraube aufgewickelte Form eines Leitungselements wird besonders vorteilhaft eine besonders große Drahtlänge ermöglicht, in welcher dank der größeren Weglänge eine stärkere Dämpfung von akustischen Schwingungen stattfindet. Bevorzugt können in einem Herstellungsprozess oder Montageprozess eines Ultraschallwandlers direkt vor der Zusammensetzung mit dem piezo-elektrischen Oszillator derartige Schraubenfedern gewickelt werden. Durch die geringen Platzanforderungen und die mechanische Stabilität von Schraubenfedern ergeben sich besonders vorteilhafte Erleichterungen bei der Anordnung der als Schraubenfedern ausgeführten Leitungselemente und der Kontaktierung des piezo-elektrischen Oszillators mit derartigen Leitungselementen. Weiterhin wird dadurch besonders vorteilhaft ermöglicht, die Zusammensetzung als kombiniertes Bauteil aus piezo-elektrischem Oszillator und Schraubenfedern im weiteren Herstellungsprozess eines erfindungsgemäßen Ultraschallwandlers gemeinsam zu handhaben. Durch die Vorteile bei der Handhabung und der Herstellung sinken wiederum die Produktionskosten sowie die Anforderungen an zusätzliche Qualitätskontrollen werden verringert.

Der Ultraschallwandler weist zumindest zwei Schraubenfedern als Leitungselemente auf. Da ein piezo-elektrischer Oszillator an zumindest zwei verschiedenen Stellen zugleich unterschiedlichen elektrischen Feldern oder Potentialen ausgesetzt werden muss, um einen piezo-elektrischen Effekt auszulösen, ist es besonders vorteilhaft, zumindest zwei Leitungselemente zu verwenden. Insbesondere vorteilhaft ist die Verwendung von als Schraubenfedern gestalteten Leitungselementen, weil sie eine besonders vorteilhaft günstige Montage und gute Dämpfungseigenschaften in Hinsicht auf akustische Schwingungen aufweisen.

Bei einer weiteren besonders vorteilhaften Ausführungsform eines Ultraschallwandlers weist die Oberfläche des piezo-elektrischen Oszillators in einem oder mehreren Bereichen eine Metallisierung zur elektrischen Kontaktierung auf. Dadurch wird besonders vorteilhaft die Kontaktierung bzw. das Anlegen von Betriebsspannungen an den piezo-elektrischen Oszillator ermöglicht. Durch eine Metallisierung sind eine besonders platzsparende Kontaktierung und zugleich eine räumliche Homogenität der anliegenden Spannung besonders vorteilhaft möglich.

Bei einer weiteren besonders vorteilhaften Ausführungsform eines Ultraschallwandlers mit einem piezo- elektrische Oszillator, der auf zwei gegenüberliegenden Seiten metallisierte Bereiche aufweist, sind die Oberflächen der Metallisierungen aufweisenden Seiten des Oszillators ganz oder teilweise durch Metallisierung bedeckt und die Metallisierung von einer ersten Seite ist derart über eine dritte Seite des Oszillators zu einer zweiten Seite des Oszillators geführt, dass beide Metallisierungen elektrisch getrennte Bereiche auf entweder der ersten oder der zweiten Seite des Oszillators bilden. Dadurch wird besonders vorteilhaft die Kontaktierung des piezo-elektrischen Oszillators erleichtert. Außerdem kann dadurch besonders platzsparend eine Kontaktierung stattfinden.

Da piezo-elektrische Keramiken typischerweise nicht elektrisch leitfähig sind, genügt eine verhältnismäßig kleine Unterbrechung zwischen den verschiedenen metallisierten Bereichen, um diese elektrisch zu separieren. Beispielsweise kann auf einer Seite des piezo-elektrischen Oszillators ein Anteil von knapp 95% der Oberfläche von einem metallisierten Bereich eingenommen werden während knapp 5% der Oberfläche auf den Anteil entfallen, der elektrisch in Verbindung mit einer metallisierten Fläche auf der Oberfläche der gegenüberliegenden Seite des piezo-elektrischen Oszillators stehen. Auf den nichtmetallisierten Bereich, der die beiden metallisierten Bereiche voneinander trennt, entfällt hierbei ein geringer Flächenanteil von unter 1% der Fläche. Es ist aber auch vorstellbar, dass ein größerer Anteil auf die Trennung entfällt. Weiterhin ist eine andere Flächenaufteilung auch denkbar, so zum Beispiel eine Aufteilung von knapp 85% zu knapp 15% oder eine Aufteilung von 84,5% zu 14,5%, wobei im letzteren Fall 1% auf den nichtmetallisierten Bereich zur elektrischen Trennung entfallen würde.

Bei einer weiteren besonders vorteilhaften Ausführungsform eines Ultraschallwandlers mit zumindest zwei Schraubenfedern als Leitungselementen und einem piezo-elektrische Oszillator, der auf zwei gegenüberliegenden Seiten metallisierte Bereiche aufweist, wobei die Oberflächen der Metallisierungen aufweisenden Seiten des Oszillators ganz oder teilweise durch Metallisierung bedeckt sind und die Metallisierung von einer ersten Seite derart über eine dritte Seite des Oszillators zu einer zweiten Seite des Oszillators geführt ist, dass beide Metallisierungen elektrisch getrennte Bereiche auf entweder der ersten oder der zweiten Seite des Oszillators bilden, stehen jede der zwei Schraubenfedern mit jeweils einem der elektrisch getrennten Bereiche der Metallisierung des piezo-elektrischen Oszillators in elektrischem Kontakt. Dadurch wird besonders vorteilhaft ermöglicht, zwei Schraubenfedern auf einer metallisierten Seite des piezo-elektrischen Oszillators anzuordnen, wobei die gegenüberliegende Seite des Oszillators mit Ausnahme der Metallisierung frei bleiben kann und somit beispielsweise besonders gut mit einer Anpassungsschicht in Berührung gebracht werden, wobei nur die Metallisierung zwischen dem Oszillator und der Anpassungsschicht sein muss.

In einer besonders vorteilhaften Ausführungsform eines Ultraschallwandlers weisen die Enden der Leitungselemente, welche nicht mit dem piezo-elektrischen Oszillator in Kontakt stehen, Kontaktierungsbereiche auf, mit denen elektrische Verbindungen mit einer Platine oder anderen elektrischen Bauteilen ausgebildet werden können. Dadurch wird besonders vorteilhaft die elektrische Verbindung der Leitungselemente und somit des Oszillators mit weiteren elektrischen Bauteilen, beispielsweise einer Auswertungselektronik, mittels beispielsweise Löten, Klemmen, Kleben oder (Punkt-)Schweißen ermöglicht. Beispielsweise können die Enden der Leitungselemente, welche nicht mit dem piezo-elektrischen Oszillator in Kontakt stehen, auch direkt oder über ein Vermittlungselement Kontaktstifte aufweisen, mit welchen eine Verbindung mittels Einpresstechnik möglich ist.

Bei einer besonders vorteilhaften Ausführungsform eines Ultraschallwandlers wird die Abstützung direkt oder über ein oder mehrere vermittelnde Strukturelemente auf einer Platine abgestützt. Dadurch wird eine besonders kompakte und robuste, somit kostengünstige und wartungsarme Bauweise eines erfindungsgemäßen Ultraschallwandlers ermöglicht.

Bei einer besonders vorteilhaften Ausführungsform eines Ultraschallwandlers besteht die Dämpfungsmasse aus einem Elastomer-Material. Durch die Verwendung eines derartigen Materials werden besonders wünschenswerte Schwingungseigenschaften der Dämpfungsmasse und einfache Handhabung bei der Herstellung eines Ultraschallwandlers ermöglicht.

Besonders vorteilhaft weist eine Messvorrichtung zur Messung eines Abstands einen Ultraschallwandler gemäß der vorliegenden Erfindung auf.

Besonders vorteilhaft weist eine Luftfederungsvorrichtung für ein Kraftfahrzeug eine Messvorrichtung zur Messung eines Abstands mit einem Ultraschallwandler gemäß der vorliegenden Erfindung auf.

Besonders vorteilhaft weist ein Kraftfahrzeug oder Schienenfahrzeug eine Luftfederungsvorrichtung eine Messvorrichtung zur Messung eines Abstands mit einem Ultraschallwandler gemäß der vorliegenden Erfindung auf.

Besonders vorteilhaft weist eine Industrieanlage eine Messvorrichtung mit einem Ultraschallwandler gemäß der vorliegenden Erfindung auf, wobei die Messvorrichtung zur Regelung einer Höhenverstellung der Industrieanlage verwendet wird.

Besonders vorteilhaft weist eine Sitzsteuerung oder ein Sitz einen Ultraschallwandler gemäß der vorliegenden Erfindung auf, wobei der Ultraschallwandler im Zusammenhang mit einer Regelung oder Steuerung der Sitzhöhe verwendet wird.

Besonders vorteilhaft weist ein Bergbaufahrzeug, ein landwirtschaftliches Fahrzeug oder ein landwirtschaftliches Anbaugerät einen Ultraschallwandler gemäß der vorliegenden Erfindung auf, wobei der Ultraschallwandler im Zusammenhang mit der Regelung oder Steuerung einer Höhe, eines Niveaus oder eines Abstands verwendet wird.

Die Erfindung wird nachfolgend anhand der Figuren der Zeichnung näher erläutert, wobei gleiche oder ähnliche Elemente mit denselben Bezugszeichen versehen sind. Es zeigt:

Figur 1 einen erfindungsgemäßen Ultraschallwandler in einer Schnittzeichnung,

Figur 2 den Ultraschallwandler aus Figur 1 in einer weiteren Schnittzeichnung, wobei die Schnittebene um 90° gegenüber der Schnittebene von Figur 1 gedreht ist,

Figur 3 einen Ultraschallwandler mit einem zusätzlichen Strukturelement und mit Kontaktstiften in einer Schnittzeichnung in derselben Schnittebene wie in Figur 1.

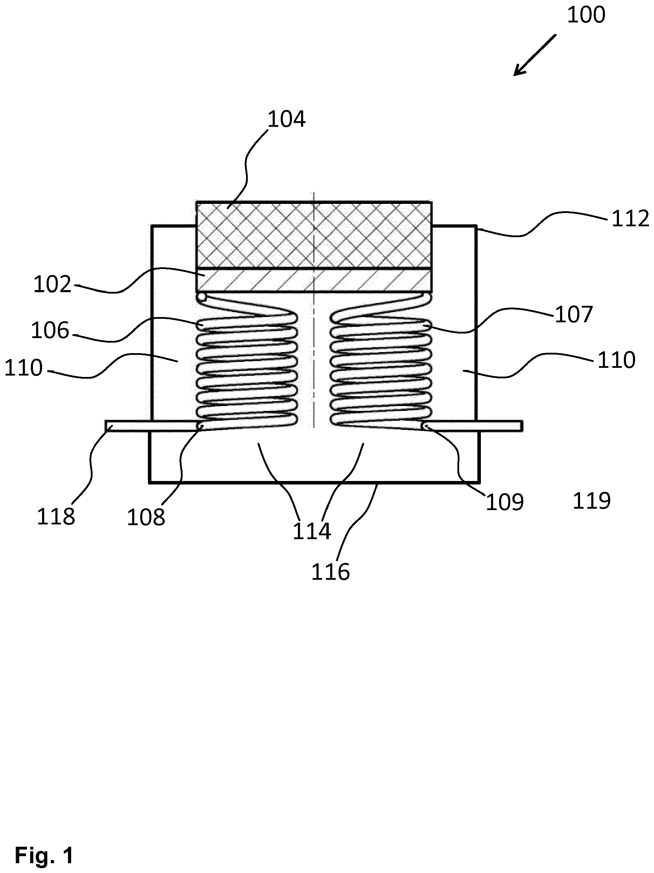

Figur 1 zeigt einen erfindungsgemäßen Ultraschallwandler 100 in einer Schnittzeichnung. Die hier gezeigte Ausführungsform des Ultraschallwandlers 100 weist einen piezo-elektrischen Oszillator 102 und zwei als Schraubenfeder ausgeführte Leitungselemente 106, 107 auf. Die Leitungselemente 106, 107 stehen jeweils an einem Ende mit dem piezo-elektrischen Oszillator 102 in Berührung. Dabei ist der piezo-elektrische Oszillator bevorzugt auf zwei gegenüberliegenden Seiten zur elektrischen Kontaktierung metallisiert und jede der zwei Schraubenfedern steht mit jeweils einem der elektrisch getrennten Bereiche der Metallisierung des piezo-elektrischen Oszillators in elektrischem Kontakt. Weiterhin sind die Leitungselemente 106, 107 von einer Dämpfungsmasse 110 weitgehend umschlossen. Der Verbund 114 aus Leitungselementen 106, 107 und Dämpfungsmasse 110 bildet eine Abstützung 116 aus. Die Dämpfungsmasse 110 kann durch ein Gießverfahren in einem Zug bei der Herstellung des Ultraschallwandlers 100 eingebracht werden. Es ist aber auch möglich, dass die Abstützung 114 außerdem weitere Materialien aufweist oder um ein oder mehrere Strukturelemente 115 erweitert sein kann, welche zur Ausbildung der Abstützung 116 beitragen können. Das oder die Strukturelemente 115 können aus einem anderen Material, beispielsweise aus einem Kunststoff, bestehen. Auf ihrer dem piezo-elektrischen Oszillator 102 abgewandten Seite kann der Verbund 114 im Bereich der Abstützung 116 mit weiteren Bestandteilen einer Anordnung mit einem erfindungsgemäßen Ultraschallwandler 100 in Berührung stehen. Beispielsweise kann dort eine Platine 120, ein Gehäuseteil oder ein weiteres Strukturelement angeordnet sein.

Die Grenzflächen 112 markieren die Grenzen des von der Dämpfungsmasse 110 ausgefüllten Volumens, wo nicht andere Bestandteile des Ultraschallwandlers 100 in unmittelbarer Berührung mit der Dämpfungsmasse 110 stehen. In dieser Ausführungsform eines Ultraschallwandlers 100 ist die Dämpfungsmasse 110 an den Grenzflächen 112 nicht von einem Gehäuse umgeben, um möglichst gute Dämpfungseigenschaften zu gewährleisten und nicht durch ein starres Gehäuse zu verändern. Es sind andere Ausführungsformen eines erfindungsgemäßen Ultraschallwandlers 100 denkbar, bei denen die Dämpfungsmasse 110 durch ein Gehäuse an den Grenzflächen 112 ganz oder teilweise umgeben wird. Außer einem starren Gehäuse ist auch denkbar, die Dämpfungsmasse 110 an den Grenzflächen 112 mit einer flexiblen Folie ganz oder teileweise zu umgeben. Es sind auch Varianten denkbar, bei denen die Dämpfungsmasse 110 an allen Grenzflächen 112 von einem Gehäuse oder einer Folie umgeben ist, bis auf die Grenzfläche, die dem piezo-elektrischen Oszillator 102 abgewandt ist. Dort kann die Abstützung 116 mit weiteren Bestandteilen einer Anordnung mit einem erfindungsgemäßen Ultraschallwandler 100 in Berührung stehen. Beispielsweise kann dort eine Platine 120, ein Gehäuseteil oder ein Strukturelement angeordnet sein.

In der in gezeigten Ausführungsform weisen die Leitungselemente 106, 107 Kontaktierungsbereiche 108, 109 auf. Die Kontaktierungsbereiche 108, 109 befinden sich an den Enden der hier als Schraubenfedern ausgeführten Leitungselemente 106, 107, welche nicht mit dem piezo-elektrischen Oszillator 102 in Kontakt stehen. Mit den Kontaktierungsbereichen 108, 109 können elektrische Verbindungen mit einer Platine 120 oder anderen elektrischen oder elektronischen Bauteilen ausgebildet werden. In der gezeigten Ausführungsform stehen Kontaktierungselemente 118, 119 mit den Kontaktierungsbereichen 108, 109 der Leitungselemente 106, 107 in Kontakt. Die kontaktschaffende Verbindung zwischen Kontaktierungsbereichen 108, 109 und Kontaktierungselementen 118, 119 oder zwischen Kontaktierungsbereichen 108, 109 und einer Platine 120 oder anderen elektrischen oder elektronischen Bauteilen kann durch Löten, Klemmen, Schweißen, Kleben und auf anderem Weg hergestellt sein.

Die Dämpfungsmasse 110 umschließt weitere Bestandteile des Ultraschallwandlers 100 ganz oder teilweise. In der gezeigten Variante sind die zwei als Schraubenfedern ausgeführten Leitungselemente 106, 107 sowie der piezo-elektrische Oszillator 102 von der Dämpfungsmasse 110 umschlossen. Auf der dem Schwingungsmedium zugewandten Seite des piezo-elektrischen Oszillators 102 befindet sich eine Anpassungsschicht 104, welche auch zumindest teilweise von der Dämpfungsmasse 110 umschlossen ist. Die Anpassungsschicht 104 kann auf die Arbeitsfrequenz und/oder das Schwingungsmedium abgestimmte sein und dient der möglichst effektiven Übertragung von Schwingungen zwischen dem piezo-elektrischen Oszillator 102 und dem Schwingungsmedium. In dieser Hinsicht könnte man auch sagen, dass die Anpassungsschicht 104 und der Verbund 114 aus Dämpfungsmasse 110 sowie Leitungselementen 106, 107 exakt gegensätzlichen Zielen gemäß ausgeführt sind: Während die Anpassungsschicht 104 möglichst gut Schwingungen übertragen soll, soll der Verbund aus Dämpfungsmasse 110 und Leitungselementen 106, 107 möglichst schlecht Schwingungen koppeln, d.h. möglichst wenig Schwingungsenergie an das übertragen, was z.B. im Bereich der Abstützung 116 mit dem Ultraschallwandler 100 in Berührung steht. In der Form wie der gezeigten, bei der die Leitungselemente 106, 107 von der Dämpfungsmasse 110 umschlossen sind, trägt die Verbindung von Dämpfungsmasse 110 und Schraubenfedern 106, 107 auch zum Schwingungsverhalten der Leitungselemente 106, 107 bzw. zum Elastizitätsmodul des Verbunds 114 aus Leitungselementen 106, 107 und Dämpfungsmasse 110 bei, sodass vorteilhafterweise die Leitungselemente 106, 107 und die Dämpfungsmasse 110 so ausgeführt sind, dass ein gewünschtes Schwingungsverhalten bzw. Elastizitätsmodul des Verbundes 114 erreicht wird.

Während der piezo-elektrische Oszillator 102 auf einer Seite die Leitungselemente 106, 107 berührt, befindet sich auf seiner gegenüberliegenden Seite eine Anpassungsschicht 104. Die Anpassungsschicht 104 ist so gestaltet, dass Schwingungen des piezo-elektrischen Oszillators 102 möglichst effizient an das Schwingungsmedium, das mit der Anpassungsschicht 104 in Berührung steht, abgegeben werden. Umgekehrt ist die Anpassungsschicht 104 auch so gestaltet, dass Schwingungen des Mediums möglichst gut an den piezo-elektrischen Oszillator 102 weitergegeben werden. In anderen Worten ist die Anpassungsschicht so gestaltet, dass sie möglichst gut den piezo-elektrischen Oszillator und das schwingende Medium koppelt. Eine möglichst gute Kopplung kann sich beispielsweise durch möglichst geringe Übertragungsverluste auszeichnen.

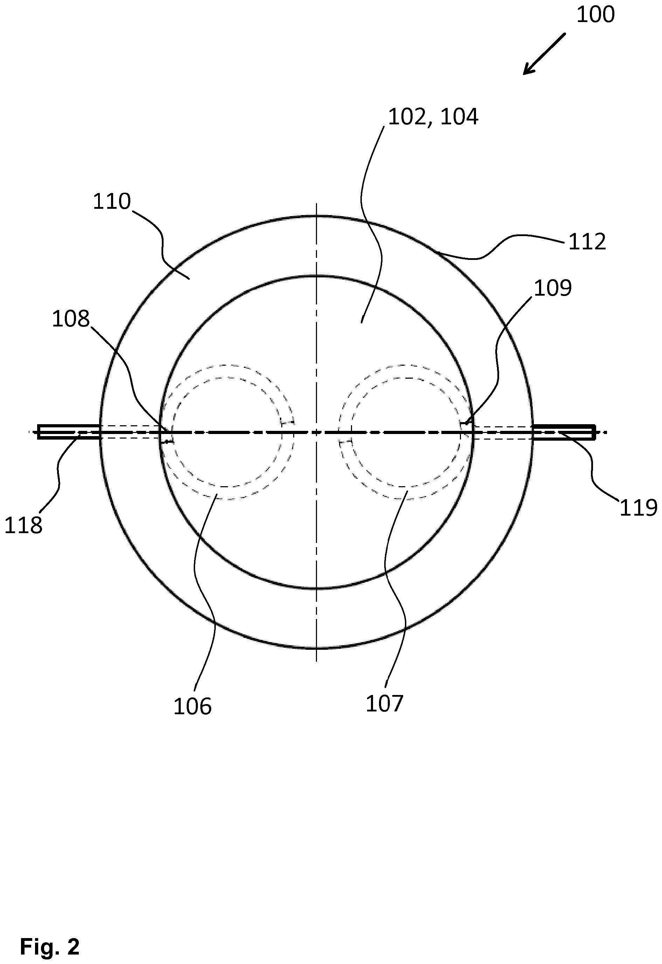

Figur 2 zeigt eine beispielhafte Ausführungsform eines erfindungsgemäßen Ultraschallwandlers 100 in einer Ansicht, bei der die Anpassungsschicht 104 vor dem piezo-elektrischen Oszillator 102 liegt und diesen in dieser Ansicht vollständig verdeckt. Man blickt also aus der Richtung, wo sich im typischen Einsatz des Ultraschallwandlers 100 das Schwingungsmedium, insbesondere Luft, befindet. Ringartig um die Anpassungsschicht 104 blickt man in dieser Ansicht des beispielhaften Ultraschallwandlers 100 auf die Dämpfungsmasse 110 mit den Grenzflächen 112, welche zusammen mit den Leitungselementen 106, 107 einen Verbund 114 ausbildet. Die Leitungselemente 106, 107 sind als zwei Schraubenfedern ausgeführt und stehen in diesem Beispiel in Kontaktierungsbereichen 108, 109 mit Kontaktierungselementen 118, 119 in elektrischem Kontakt. Die Schraubenfedern sind als gestrichelte Ringe angedeutet. Die Kontaktierungselemente 118, 119 ragen seitlich aus dem Ultraschallwandler 100 heraus.

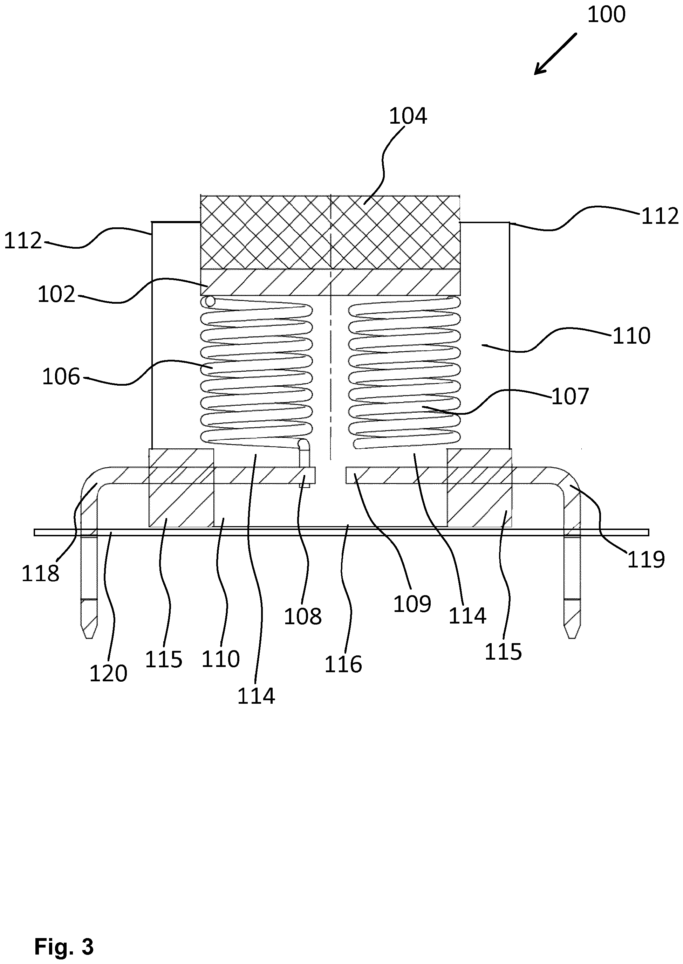

Bei der in Figur 3 gezeigten vorteilhaften Ausführungsform eines erfindungsgemäßen Ultraschallwandlers 100 ist der Verbund 114 aus der Dämpfungsmasse 110 und den Leitungselementen 106, 107 mit einem ringförmigen Strukturelement 115 gestaltet. Ein Teil des Verbundes 114 befindet sich innerhalb des ringförmigen Strukturelements 115. Das Strukturelement 115 hat in der gezeigten Ausführungsform auch den Nutzen, die Kontaktierungselemente 118, 119 anzuordnen. Das Strukturelement 115 kann beispielsweise aus einem Kunststoff gefertigt sein. In der gezeigten Ausführungsform wird die Abstützung 116 so von dem Verbund 114 und dem Strukturelement 115 gebildet, dass sie einen gemeinsamen Abschluss ausbilden, welcher auf einer Höhe liegt. Im gezeigten Beispiel ist an der Abstützung 116 eine Platine 120 angeordnet. In einem beispielhaften Herstellungsverfahren für einen erfindungsgemäßen Ultraschallwandler 100 können zunächst die Anpassungsschicht 104, der piezo-elektrische Oszillator 102, die Leitungselemente 106, 107, das oder die Kontaktierungselemente 118, 119 mit einem oder mehreren Strukturelementen 115 angeordnet werden und dann die Dämpfungsmasse in einem Gießverfahren eingebracht werden, im Fall eines ringförmigen Strukturelements 115 beispielsweise auch durch die Öffnung des Rings, sodass dann der Verbund 114 durch die Verbindung von Dämpfungsmasse 110 und den Leitungselementen 106, 107 entsteht.

## Patentansprüche

1. Ultraschallwandler (100) mit zumindest einem piezo-elektrischen Oszillator (102), einer Dämpfungsmasse (110) und zwei elektrisch leitfähigen Leitungselementen (106, 107), welche mit dem piezo-elektrischen Oszillator (102) in Berührung stehen, wobei die Dämpfungsmasse (110) die Leitungselemente (106, 107) umschließt und der Verbund (114) aus den Leitungselementen (106, 107) und der Dämpfungsmasse (110) so gestaltet ist, dass der Verbund (114) flächig mit dem piezo-elektrischen Oszillator (102) in Berührung steht und auf der dem piezo-elektrischen Oszillator (102) abgewandten Seite des Ultraschallwandlers (100) eine Abstützung (116) ausbildet, an der der Ultraschallwandler (100) abgestützt werden kann, wobei die Leitungselemente (106, 107) als Schraubenfedern gestaltet sind und wobei die Leitungselemente (106, 107) jeweils an einem Ende mit dem piezo-elektrischen Oszillator (102) in Berührung stehen.

2. Ultraschallwandler (100) nach Anspruch 1, wobei die Dämpfungsmasse (110) aus einem Elastomer-Material besteht.

3. Ultraschallwandler (100) nach Anspruch 1, wobei der Verbund (114) aus der Dämpfungsmasse (110) und den Leitungselementen (106, 107) so gestaltet ist, dass Schwingungen des piezo-elektrischen Oszillators (102) auf ihrem Weg durch den Verbund (114) derart gedämpft werden, dass ihre Amplitude an der Abstützung (116) um mindestens einen Faktor 10 schwächer sind, als am piezo-elektrischen Oszillator (102), wobei das Material für die Dämpfungsmasse (110) ein Polymer, ein Kunststoff, ein Elastomer oder ein Epoxidharz ist.

4. Ultraschallwandler (100) nach einem der vorangehenden Ansprüche, wobei die Länge der Leitungselemente (106, 107), an deren Enden, welche nicht mit dem piezo-elektrischen Oszillator (102) in Kontakt stehen, sich Kontaktierungsbereiche (108, 109) befinden, derart auf eine Arbeitsfrequenz des piezo-elektrischen Oszillators (102) abgestimmt ist, dass an der Abstützung (116) die Übertragung von Schwingungsenergie von Schwingungen des piezo-elektrischen Oszillators (102) dadurch minimiert ist, dass eine Bedingung für einen Schwingungsknoten an der Abstützung (116) vorliegt, wobei die Länge der Leitungselemente (106, 107) derart gestaltet ist, dass die Länge ein ungeradzahliges Vielfaches von einem Viertel der mit der Arbeitsfrequenz des piezo-elektrischen Oszillators (102) korrespondierenden Wellenlänge ist.

5. Ultraschallwandler (100) nach einem der vorangehenden Ansprüche, wobei der von dem Verbund (114) überbrückte Abstand zwischen dem piezo-elektrischem Oszillator (102) und der Abstützung (116) derart auf eine Arbeitsfrequenz des piezo-elektrischen Oszillators (102) abgestimmt ist, dass an der Abstützung (116) die Übertragung von Schwingungsenergie von Schwingungen des piezo-elektrischen Oszillators (102) dadurch minimiert ist, dass eine Bedingung für einen Schwingungsknoten an der Abstützung (116) vorliegt, wobei der von dem Verbund (114) überbrückte Abstand zwischen dem piezo-elektrischen Oszillator (102) und der Abstützung (116) derart gestaltet ist, dass der Abstand ein ungeradzahliges Vielfaches von einem Viertel der mit der Arbeitsfrequenz des piezo-elektrischen Oszillators (102) korrespondierenden Wellenlänge ist.

6. Ultraschallwandler (100) nach den Ansprüchen 4 und 5, wobei sowohl die Leitungselemente (106, 107) für sich genommen als auch der Verbund (114), welchem auch die Leitungselemente (106, 107) angehören, derart auf eine Arbeitsfrequenz des piezo-elektrischen Oszillators (102) abgestimmt sind, dass an der Abstützung (116) die Übertragung von Schwingungsenergie von Schwingungen des piezo-elektrischen Oszillators (102) dadurch minimiert ist, dass die Bedingung für einen Schwingungsknoten an der Abstützung (116) vorliegt, wobei die Länge der Leitungselemente (106, 107) und der von dem Verbund (114) überbrückte Abstand zwischen dem piezo-elektrischen Oszillator (102) und der Abstützung derart gestaltet ist, dass die Länge und der Abstand ein ungeradzahliges Vielfaches von einem Viertel der mit der Arbeitsfrequenz des piezo-elektrischen Oszillators (102) korrespondierenden Wellenlänge ist.

7. Ultraschallwandler (100) nach einem der Ansprüche 4 bis 6, wobei die Bedingung Schwingungsknoten für einen Schwingungsknoten an der Abstützung gegeben ist, indem die Länge der Leitungselemente, an deren Enden, welche nicht mit dem piezo-elektrischen Oszillator (102) in Kontakt stehen, sich Kontaktierungsbereiche (108, 109) befinden, und / oder der von dem Verbund (114) überbrückte Abstand zwischen dem piezo-elektrischem Oszillator (102) und der Abstützung (116) derart gestaltet ist, dass die Länge und / oder der Abstand ein ungeradzahliges Vielfaches von einem Viertel der mit der Arbeitsfrequenz des piezo-elektrischen Oszillators (102) korrespondierenden Wellenlänge ist.

8. Ultraschallwandler nach einem der vorangehenden Ansprüche, wobei die Oberfläche des piezo-elektrischen Oszillators (102) in einem oder mehreren Bereichen eine Metallisierung zur elektrischen Kontaktierung aufweist.

9. Ultraschallwandler (100) nach Anspruch 8, wobei der piezo-elektrische Oszillator (102) auf zwei gegenüberliegenden Seiten metallisierte Bereiche aufweist, wobei die Oberflächen der Metallisierungen aufweisenden Seiten des Oszillators ganz oder teilweise durch Metallisierung bedeckt sind, und wobei die Metallisierung von einer ersten Seite derart über eine dritte Seite des Oszillators (102) zu einer zweiten Seite des Oszillators (102) geführt ist, dass beide Metallisierungen elektrisch getrennte Bereiche auf entweder der ersten oder der zweiten Seite des Oszillators (102) bilden.

10. Ultraschallwandler (100) nach Anspruch 9, wobei jede der zwei Schraubenfedern (106, 107) mit jeweils einem der elektrisch getrennten Bereiche der Metallisierung des piezo-elektrischen Oszillators (102) in elektrischem Kontakt steht.

11. Ultraschallwandler (100) nach einem der vorangehenden Ansprüche, wobei die Enden der Leitungselemente (106, 107), welche nicht mit dem piezo-elektrischen Oszillator (102) in Kontakt stehen, Kontaktierungsbereiche (108, 109) aufweisen, mit denen elektrische Verbindungen mit einer Platine oder anderen elektrischen Bauteilen ausgebildet werden können.

12. Ultraschallwandler (100) nach einem der vorangehenden Ansprüche, wobei die Abstützung (116) direkt oder über ein oder mehrere vermittelnde Strukturelemente (115) auf einer Platine (120) abgestützt wird.

13. Messvorrichtung zur Messung eines Abstands, wobei die Messvorrichtung einen Ultraschallwandler (100) nach einem der vorigen Ansprüche aufweist.

14. Luftfederungsvorrichtung für ein Kraftfahrzeug mit einer Messvorrichtung nach Anspruch 13.

15. Kraftfahrzeug oder Schienenfahrzeug mit einer Luftfederungsvorrichtung nach Anspruch 14.

16. Industrieanlage, bei der eine Messvorrichtung nach Anspruch 13 zur Regulierung einer Höhenverstellung der Industrieanlage verwendet wird.

17. Sitzsteuerung oder Sitz, bei der ein Ultraschallwandler nach einem der Ansprüche 1 bis 12 zur Steuerung der Sitzhöhe verwendet wird.

18. Bergbaufahrzeug, landwirtschaftliches Fahrzeug oder landwirtschaftliches Anbaugerät, das einen Ultraschallwandler nach einem der Ansprüche 1 bis 12 Steuerung einer Höhe, eines Niveaus oder eines Abstands verwendet.

## Claims

1. Ultrasound transducer (100) with at least one piezoelectric oscillator (102), a damping compound (110) and two electrically conductive conducting elements (106, 107) that are in contact with the piezoelectric oscillator (102), wherein the damping compound (110) encloses the conducting elements (106, 107), and the composite structure (114) of the conducting elements (106, 107) and of the damping compound (110) is designed such that the composite structure (114) is in contact over an area with the piezoelectric oscillator (102), and forms a support (116) on the side of the ultrasound transducer (100) that faces away from the piezoelectric oscillator (102) on which the ultrasound transducer (100) can be supported, wherein the conducting elements (106, 107) are designed as helical springs, and wherein the conducting elements (106, 107) are each in contact with the piezoelectric oscillator (102) at one end.

2. Ultrasound transducer (100) according to Claim 1, wherein the damping compound (110) consists of an elastomer material.

3. Ultrasound transducer (100) according to Claim 1, wherein the composite structure (114) of the damping compound (110) and the conducting elements (106, 107) is designed such that oscillations of the piezoelectric oscillator (102) are damped on their way through the composite structure (114) in such a way that their amplitude at the support (116) is weaker by a factor of at least 10 than at the piezoelectric oscillator (102), wherein the material for the damping compound (110) is a polymer, a plastic, an elastomer or an epoxy resin.

4. Ultrasound transducer (100) according to one of the preceding claims, wherein the length of the conducting elements (106, 107), at whose ends that are not in contact with the piezoelectric oscillator (102) contact regions (108, 109) are located, is matched to a working frequency of the piezoelectric oscillator (102) in such a way that the transmission of oscillation energy from oscillations of the piezoelectric oscillator (102) at the support (116) is minimized in that a condition for an oscillation node is present at the support (116), wherein the length of the conducting elements (106, 107) is designed such that the length is an uneven multiple of one quarter of the wavelength corresponding to the working frequency of the piezoelectric oscillator (102).

5. Ultrasound transducer (100) according to one of the preceding claims, wherein the distance between the piezoelectric oscillator (102) and the support (116) that is bridged by the composite structure (114) is matched to a working frequency of the piezoelectric oscillator (102) in such a way that the transmission of oscillation energy from oscillations of the piezoelectric oscillator (102) at the support (116) is minimized in that a condition for an oscillation node is present at the support (116), wherein the distance between the piezoelectric oscillator (102) and the support (116) that is bridged by the composite structure (114) is designed such that the distance is an uneven multiple of one quarter of the wavelength corresponding to the working frequency of the piezoelectric oscillator (102).

6. Ultrasound transducer (100) according to Claims 4 and 5, wherein both the conducting elements (106, 107) considered in isolation, as well as the composite structure (114) to which the conducting elements (106, 107) also belong, are matched to a working frequency of the piezoelectric oscillator (102) in such a way that the transmission of oscillation energy from oscillations of the piezoelectric oscillator (102) at the support (116) is minimized in that the condition for an oscillation node is present at the support (116), wherein the length of the conducting elements (106, 107) and the distance between the piezoelectric oscillator (102) and the support that is bridged by the composite structure (114) are designed such that the length and the distance are an uneven multiple of one quarter of the wavelength corresponding to the working frequency of the piezoelectric oscillator (102).

7. Ultrasound transducer (100) according to one of Claims 4 to 6, wherein the oscillation node condition for an oscillation node at the support is given in that the length of the conducting elements, at whose ends that are not in contact with the piezoelectric oscillator (102) contact regions (108, 109) are located, and/or the distance between the piezoelectric oscillator (102) and the support (116) that is bridged by the composite structure (114) is designed such that the length and/or the distance is an uneven multiple of one quarter of the wavelength corresponding to the working frequency of the piezoelectric oscillator (102).

8. Ultrasound transducer according to one of the preceding claims, wherein the surface of the piezoelectric oscillator (102) has a metallization for electrical contacting in one or a plurality of regions.

9. Ultrasound transducer (100) according to Claim 8, wherein the piezoelectric oscillator (102) comprises metallized regions on two opposite sides, wherein the surfaces of the sides of the oscillator that have metallizations are wholly or partially covered by metallization, and wherein the metallization is carried over from a first side via a third side of the oscillator (102) to a second side of the oscillator (102) in such a way that both metallizations form electrically separate regions on either the first or the second side of the oscillator (102).

10. Ultrasound transducer (100) according to Claim 9, wherein each of the two helical springs (106, 107) is in electrical contact with respectively one of the electrically separate regions of the metallization of the piezoelectric oscillator (102).

11. Ultrasound transducer (100) according to one of the preceding claims, wherein the ends of the conducting elements (106, 107) that are not in contact with the piezoelectric oscillator (102) comprise contact regions (108, 109) with which electrical connections can be made to a circuit board or other electrical components.

12. Ultrasound transducer (100) according to one of the preceding claims, wherein the support (116) is supported on a circuit board (120) directly or via one or a plurality of mediating structural elements (115).

13. Measuring device for measuring a distance, wherein the measuring device comprises an ultrasound transducer (100) according to one of the preceding claims.

14. Pneumatic suspension apparatus for a motor vehicle with a measuring device according to Claim 13.

15. Motor vehicle or rail vehicle with a pneumatic suspension apparatus according to Claim 14.

16. Industrial plant in which a measuring device according to Claim 13 is used for regulation of a height adjustment of the industrial plant.

17. Seat controller or seat in which an ultrasound transducer according to one of Claims 1 to 12 is used for controlling the seat height.

18. Mining vehicle, agricultural vehicle or agricultural attachment that uses an ultrasound transducer according to one of Claims 1 to 12 for the control of a height, a level or a distance.

**Revendications**

1. Transducteur d'ultrasons (100), comprenant au moins un oscillateur piézoélectrique (102), une masse d'amortissement (110) et deux éléments de ligne (106, 107) électriquement conducteurs qui sont en contact avec l'oscillateur piézoélectrique (102), dans lequel la masse d'amortissement (110) entoure les éléments de ligne (106, 107), et l'ensemble (114) composé des éléments de ligne (106, 107) et de la masse d'amortissement (110) est configuré de telle sorte que l'ensemble (114) est en contact plan avec l'oscillateur piézoélectrique (102) et réalise sur le côté, détourné de l'oscillateur piézoélectrique (102), du transducteur d'ultrasons (100) un appui (116) sur lequel le transducteur d'ultrasons (100) peut prendre appui, dans lequel les éléments de ligne (106, 107) sont configurés sous forme de ressorts cylindriques, et dans lequel les éléments de ligne (106, 107) sont en contact avec l'oscillateur piézoélectrique (102) au niveau d'une extrémité respectivement.

2. Transducteur d'ultrasons (100) selon la revendication 1, dans lequel la masse d'amortissement (110) est composée d'un matériau élastomère.

3. Transducteur d'ultrasons (100) selon la revendication 1, dans lequel l'ensemble (114) composé de la masse d'amortissement (110) et des éléments de ligne (106, 107) est configuré de telle sorte que des oscillations de l'oscillateur piézoélectrique (102) sur leur trajet à travers l'ensemble (114) sont amorties de telle sorte que leur amplitude au niveau de l'appui (116) est plus faible au moins d'un facteur 10 qu'au niveau de l'oscillateur piézoélectrique (102), dans lequel le matériau pour la masse d'amortissement (110) est un polymère, une matière plastique, un élastomère ou une résine époxy.

4. Transducteur d'ultrasons (100) selon l'une quelconque des revendications précédentes, dans lequel la longueur des éléments de ligne (106, 107), au niveau des extrémités desquels qui ne sont pas en contact avec l'oscillateur piézoélectrique (102) se trouvent des zones de mise en contact (108, 109), est adaptée à une fréquence de travail de l'oscillateur piézoélectrique (102) de telle sorte qu'au niveau de l'appui (116) la transmission de l'énergie d'oscillation des oscillations de l'oscillateur piézoélectrique (102) est minimisée en ce qu'une condition pour un noeud d'oscillation existe au niveau de l'appui (116), dans lequel la longueur des éléments de ligne (106, 107) est configurée de telle sorte que la longueur est un multiple impair d'un quart de la longueur d'onde correspondant à la fréquence de travail de l'oscillateur piézoélectrique (102).

5. Transducteur d'ultrasons (100) selon l'une quelconque des revendications précédentes, dans lequel la distance entre l'oscillateur piézoélectrique (102) et l'appui (116), couverte par l'ensemble (114), est adaptée à une fréquence de travail de l'oscillateur piézoélectrique (102) de telle sorte qu'au niveau de l'appui (116), la transmission de l'énergie d'oscillation des oscillations de l'oscillateur piézoélectrique (102) est minimisée en ce qu'une condition pour un noeud d'oscillation existe au niveau de l'appui (116), dans lequel la distance entre l'oscillateur piézoélectrique (102) et l'appui (116), couverte par l'ensemble (114), est configurée de telle sorte que la distance est un multiple impair d'un quart de la longueur d'onde correspondant à la fréquence de travail de l'oscillateur piézoélectrique (102).

6. Transducteur d'ultrasons (100) selon les revendications 4 et 5, dans lequel à la fois les éléments de ligne (106, 107) en tant que tels, et l'ensemble (114) auquel appartiennent aussi les éléments de ligne (106, 107), sont adaptés à une fréquence de travail de l'oscillateur piézoélectrique (102) de telle sorte qu'au niveau de l'appui (116) la transmission de l'énergie d'oscillation des oscillations de l'oscillateur piézoélectrique (102) est minimisée en ce que la condition pour un noeud d'oscillation existe au niveau de l'appui (116), dans lequel la longueur des éléments de ligne (106, 107) et la distance entre l'oscillateur piézoélectrique (102) et l'appui, couverte par l'ensemble (114), sont configurées de telle sorte que la longueur et la distance sont un multiple impair d'un quart de la longueur d'onde correspondant à la fréquence de travail de l'oscillateur piézoélectrique (102).

7. Transducteur d'ultrasons (100) selon l'une quelconque des revendications 4 à 6, dans lequel la condition noeud d'oscillation pour un noeud d'oscillation au niveau de l'appui est donnée en ce que la longueur des éléments de ligne aux extrémités desquels qui ne sont pas en contact avec l'oscillateur piézoélectrique (102) se trouvent des zones de mise en contact (108, 109) et/ou la distance entre l'oscillateur piézoélectrique (102) et l'appui (116), couverte par l'ensemble (114), est configurée de telle sorte que la longueur et/ou la distance sont un multiple impair d'un quart de la longueur d'onde correspondant à la fréquence de travail de l'oscillateur piézoélectrique (102).

8. Transducteur d'ultrasons selon l'une quelconque des revendications précédentes, dans lequel la surface de l'oscillateur piézoélectrique (102) présente dans une ou plusieurs zones une métallisation pour la mise en contact électrique.

9. Transducteur d'ultrasons (100) selon la revendication 8, dans lequel l'oscillateur piézoélectrique (102) présente des zones métallisées sur deux faces opposées, dans lequel les surfaces des faces présentant des métallisations de l'oscillateur sont recouvertes entièrement ou partiellement par la métallisation, et dans lequel la métallisation est amenée d'une première face à une deuxième face de l'oscillateur (102) en passant par une troisième face de l'oscillateur (102) que les deux métallisations forment des zones électriquement isolées soit sur la première, soit sur la deuxième face de l'oscillateur (102).

**10.** Transducteur d'ultrasons (100) selon la revendication 9, dans lequel chacun des deux ressorts cylindriques (106, 107) est en contact électrique avec respectivement l'une des zones électriquement isolées de la métallisation de l'oscillateur piézoélectrique (102).

**11.** Transducteur d'ultrasons (100) selon l'une quelconque des revendications précédentes, dans lequel les extrémités des éléments de ligne (106, 107) qui ne sont pas en contact avec l'oscillateur piézoélectrique (102) présentent des zones de mise en contact (108, 109) qui permettent de réaliser des liaisons électriques avec une platine ou d'autres composants électriques.

**12.** Transducteur d'ultrasons (100) selon l'une quelconque des revendications précédentes, dans lequel l'appui (116) prend appui directement ou par l'intermédiaire d'un ou de plusieurs éléments structurels (115) sur une platine (120).

**13.** Dispositif de mesure permettant de mesurer une distance, le dispositif de mesure présentant un transducteur d'ultrasons (100) selon l'une quelconque des revendications précédentes.

**14.** Dispositif de suspension pneumatique pour un véhicule automobile, comprenant un dispositif de mesure selon la revendication 13.

**15.** Véhicule automobile ou véhicule ferroviaire, comprenant un dispositif de suspension pneumatique selon la revendication 14.

**16.** Installation industrielle, dans laquelle un dispositif de mesure selon la revendication 13 est utilisé pour réguler un réglage de hauteur de l'installation industrielle.

**17.** Commande de siège ou siège, dans laquelle ou lequel un transducteur d'ultrasons selon l'une quelconque des revendications 1 à 12 est utilisé pour commander la hauteur du siège.

**18.** Véhicule minier, véhicule agricole ou outil porté agricole qui utilise un transducteur d'ultrasons selon l'une quelconque des revendications 1 à 12 pour commander une hauteur, un niveau ou une distance.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007049212 A1
- EP 2858378 A1
- GB 2214031 A
- US 4326274 A
- EP 2466274 A1
- DE 19811982 A1
- WO 2016190993 A1